# EUROPEAN PATENT APPLICATION

(11) **EP 2 642 155 A1**
(43) Date of publication of application: **25.09.2013**
(21) Application number: 12176440.1
(22) Date of filing: 13.07.2012
(51) Int. Cl.: F16F 15/32, G01M 1/32

(54) **Magazine for balancing weights**

(30) Priority: 20.03.2012 EP 12160442
(71) Applicant: WEGMANN automotive GmbH & Co. KG, 97209 Veitshöchheim (DE)
(72) Inventor: Bode, Felix, 97209 Veitshöchheim (DE)
(74) Representative: Lohr, Georg

(57) **Abstract**

A magazine for balancing weights (10-17) is disclosed. It comprises of two holding members (22,23;31,32;41-46) which may either penetrate through holes (25,26) in the balancing weights (10-17), or which may enclose outer edges of the balancing weights (10-17) to build up a stack of balancing weights (10-17). The magazine may have a predetermined breaking point (51) through which the magazine is opened when being inserted into a dispenser.

## Description

### Field of the invention

The invention relates to means and methods for storing of balancing weights as used for vehicles.

### Description of the related art

Balancing weights are typically sold as bulk material. This may lead to damaging of the surface. Furthermore, automated processing of such material is comparatively complex. An improvement is shown in US patent 3,960,409. Therein, wheel balancing weights are disclosed on an elongated tape having an adhesive back surface. This kind of storage is only useful or comparatively light-weight, self-adhesive balancing weights. It cannot be used for clip-on balancing weights and for comparatively heavy balancing weights.

### Summary of the invention

The problem to be solved by the invention is to provide means for storing of clip-on balancing weights and/or heavy-weight, self-adhesive balancing weights, wherein the stored balancing weights can further be automatically processed without further separation and orientation of the balancing weights.

In a first embodiment of the invention, at least one holding member is provided on which the at least balancing weight is plugged on through at least one hole of the at least one balancing weight. Preferably, two holding members are provided for plugging on balancing weights through two holes. These holes may be the standard handling holes in balancing weights. The holding members may be any kind of holding tubes, rods or bars, wires, or threads. An embodiment of tubes is most preferred, as these are comparatively stiff while using a low amount of material. It is further preferred, if an end piece is provided for holding the holding members at a predetermined distance which preferably is equal to the standard balancing weight hole distance. Such an end piece may further terminate the holding members, so that the balancing weight held by the holding members cannot fall off the holding members. It is furthermore preferred, if a fastener is provided at at least one of the holding members and preferably at the other side of the balancing weights, thereby preventing the balancing weight from slipping of the other side of holding members. Most preferably, the fastener has two holes for accommodating two holding members which most preferably are connected by a common end piece. The holding members preferably are tubular members, but they may also be of solid material. They may have any suitable shape like circular, elliptical, hexagonal or unsymmetrical.

In a further embodiment, end pieces and fasteners may combine a larger number of holding members, for example 10 holding members in five rows, each row having two holding members, which may be used for building up five parallel stacks of balancing weights, wherein each balancing weight is held by two holding members in one row.

It is further preferred, if a predetermined breaking point is provided, which may be within the end piece or preferably in the connecting portion between the holding members and the end piece. This would allow automatic removal of the balancing weights from the holding members, when the holding members together with the balancing weights are inserted into a specific dispenser.

In a further embodiment, a pair of bars is provided for holding the balancing weights preferably at the outer edges. It is most preferred, if there is a base plate to connect the bars in a predetermined distance adapted to the size of the balancing weights. It is further preferred to have a locking clamp which prevents the balancing weights from slipping out of the open end of the support bars. The holding clamp may have at least one ledge for locking the clamp to the support bars. It is further preferred, if a predetermined breaking point is provided at which the support bars open when the support bars with balancing weights are inserted into a dispenser. Here also a predetermined breaking point may be provided to simplify unloading.

In a further embodiment, a plurality of wire pins is provided for enclosing balancing weights. The number of wire pins may vary depending on the specific type of balancing weights. It is further preferred, if the wire pins are connected by a base plate which most preferably is adapted to a specific type of balancing weight. There may also be a locking means for stabilizing the wire pins and preventing the balancing weights from falling out between the wire pins. There may also be some predetermined breaking point which allows for automatic removal of the balancing weights from the wire pins when inserting into a dispenser. Here also a predetermined breaking point may be provided to simplify unloading.

In another embodiment, a container for semi-automated bulk material processing is provided. Preferably, the container is made of corrugated paper, but is may also be made of any other suitable material like plastic. It preferably has a predetermined breaking line through which one side or a segment of one side is opened, so that the balancing weights can fall out of the container for further processing. Preferably, the container is positioned on a corner or an edge to simplify emptying of the container.

### Description of Drawings

In the following the invention will be described by way of example, without limitation of the general inventive concept, on examples of embodiment with reference to the drawings.
Figure 1 shows a first embodiment with holding members.
Figure 2 shows an end piece.
Figure 3 shows a second embodiment with support bars.
Figure 4 shows a locking clamp.
Figure 5 shows a third embodiment with wire pins.
Figure 6 shows a balancing weight held by wire pins.
Figure 7 shows a corrugated paper package with predetermined breaking section.

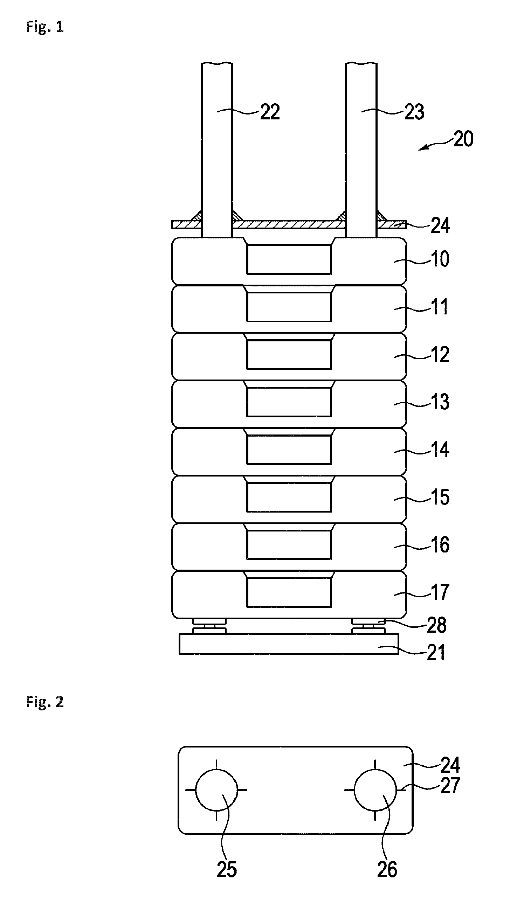

In Figure 1, a first embodiment is disclosed, where holding members 22, 23 are provided for holding a plurality of balancing weights 10 to 17. The holding members preferably are made of plastic or metal. They may also be solid plastic or metal rocks, although tubes are preferred, as these provide a higher mechanical stability by using less material. At the bottom side, the holding members are connected together by means of an end piece 21. This end piece also determines the distance between the holding members, which is adapted to the distance of holes in the balancing weights. Balancing weights often have holes in a standard distance for automated processing. These holes may be used herein for feeding through holding members. Furthermore, a fastener 24 is shown, at the top end of the balancing weights. This fastener prevents balancing weights from slipping off the holding members and holds them in a defined position. Finally, a predetermined breaking point 28 is shown at the connecting portion between the holding members 22, 23 and the end piece 21. Such a predetermined breaking point may also be within end piece 21. It allows for automatic insertion and processing into a dispenser.

In Figure 2, a fastener 24 is shown in top view. It has first and second holes 25 and 26 for holding members 22 and 23. To fix the fastener to holding members, preferably the holes 25 and 26 have a slightly smaller diameter than the outer diameter of the holding members. For allowing some flexibility, there may be cuts 27 which allow the material surrounding the holding members to flex slightly and to adapt to the size of the holding members.

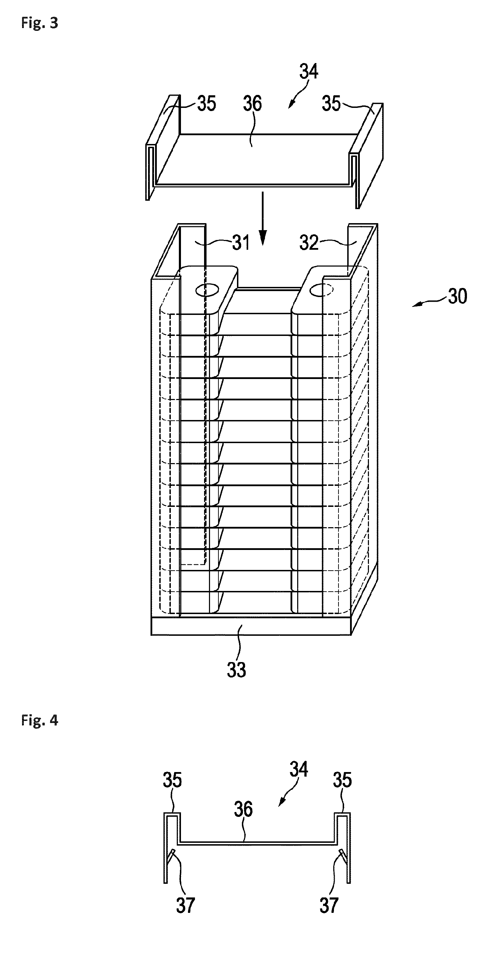

In Figure 3, another embodiment using support bars is disclosed. First and second support bars 31 and 32 are kept on a predetermined distance by base plate 33. Balancing weights are located between these support bars and held by their other sides. On top of the support bars is a locking clamp 34, which holds the support bars in a predetermined distance to each other and furthermore prevents the balancing weights from falling out of the support bars.

Figure 4 shows a locking clamp in detail. The locking clamp has a main body 36 connecting two lugs 35 for accommodating the ends of the support bars. Furthermore, ledges 37 may be provided for locking the locking clamp to the support bars. For improving locking, the support bars may have a hole into which the ledge may penetrate. In an alternate embodiment, the locking clamp may have a plurality of lugs and ledges and may therefore connect a plurality of support bars together.

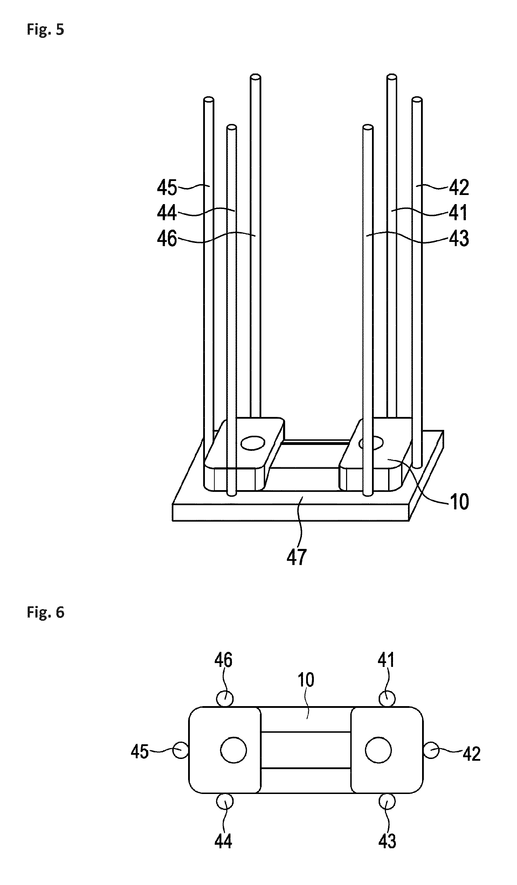

Figure 5 shows another embodiment using wire pins 41 to 46 which encircle the balancing weights. The wire pins may be adapted to the specific form of the balancing weights 10, and they may be fixed in a position by a base plate 47. Furthermore, a locking plate on the other end of the wire pins may be provided.

Figure 6 shows a balancing weight 10 enclosed by wire pins 41 to 46.

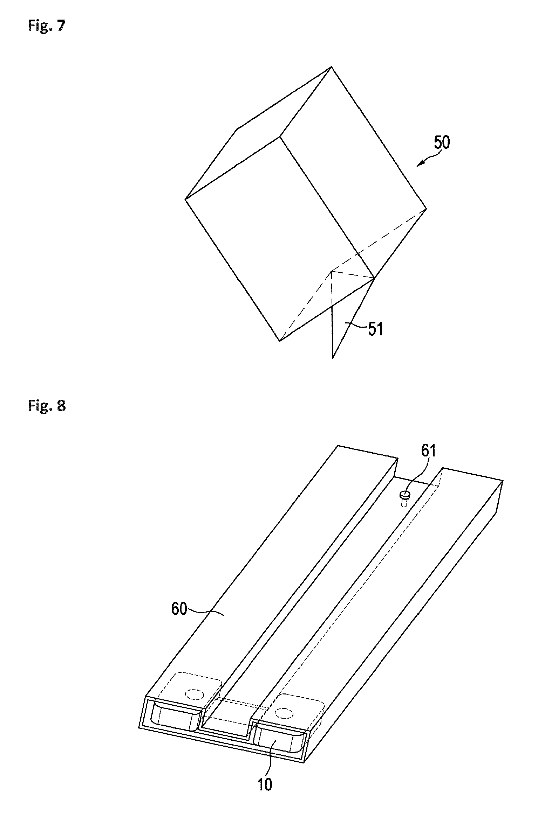

Figure 7 shows a further embodiment which allows semi-automatic processing of bulk balancing weights. A container 50 preferably made of corrugated paper or any other suitable material preferably is placed on a corner and has at least one section 51 with a predetermined breaking line which allows for easy removal of the balancing weights from the container.

Figure 8 shows an extruded container 60, which may be made from a plastic material. It may be locked by at least one locking bolt 61, keeping the balancing weights within the container.

### List of reference numerals

- 10-17: balancing weights
- 20: weight magazine
- 21: end piece
- 22, 23: holding members
- 24: fastener
- 25, 26: holes
- 27: cuts
- 28: predetermined breaking point
- 30: bar magazine
- 31, 32: support bars
- 33: base plate
- 34: locking clamp
- 35: lug
- 36: main body
- 37: ledge
- 41-46: wire pins
- 47: base plate
- 50: container
- 51: section with predetermined breaking line
- 60: extruded container
- 61: locking bolt

## Claims

1. Magazine for balancing weights, comprising at least one holding member which is fed through at least one hole of a balancing weight.

2. Magazine for balancing weights according to claim 1,
**characterized in that**
a pair of holding members (22, 23) is provided.

3. Magazine for balancing weights according to claim 2,
**characterized in that**
the distance between the holding members is adapted to the distance of two holes in a balancing weight.

4. Magazine for balancing weights according to any one of the previous claims,
**characterized in that**
an end piece (21) is provided for holding at least two holding members in a predetermined distance.

5. Magazine for balancing weights according to claim 4,
**characterized in that**
the end piece (21) connects a plurality of pairs of holding members (22, 23).

6. Magazine for balancing weights according to any one of the previous claims,
**characterized in that**
a fastener (24) is provided for preventing balancing weights from falling off the holding members.

7. Magazine for balancing weights according to claim 6,
**characterized in that**
the fastener (24) holds the holding members in a predetermined distance.

8. Magazine for balancing weights, comprising a pair of support bars (31, 32) which are held by a base plate (33) in a predetermined distance, such that they enclose the opposing outer edges of a balancing weight (10).

9. Magazine for balancing weights according to claim 8,
**characterized in that**
a locking clamp (34) is provided for locking the ends of the support bars (31, 32) opposed to the base plate.

10. Magazine for balancing weights according to claim 9,
**characterized in that**
the locking clamp has at least one ledge for fixing the locking clamp (34) to the support bars (31, 32).

11. Magazine for balancing weights (10) comprising a plurality of wire pins (41 - 46) which encircle a balancing weight to hold it in a predetermined position.

12. Magazine for balancing weights according to claim 11,
**characterized in that**
a base plate (47) is provided for holding the wire pins in predetermined positions.

13. Magazine for balancing weights according to claim 11,
**characterized in that**
a locking plate is provided for locking the balancing weights within the wire pins.

14. Magazine for balancing weights (10) comprising of a container (50) having a section (51) with a predetermined breaking line.
